# FASCICULE DE BREVET EUROPEEN

(11) **EP 3 447 271 B1**
(45) Date de publication et mention de la délivrance du brevet: **30.09.2020**
(21) Numéro de dépôt: 18190107.5
(22) Date de dépôt: 21.08.2018
(51) Int. Cl.: F02K 1/38, F02K 1/46, F02K 1/34, F02K 1/82

(54) **SYSTÈME DE CHAUFFAGE POUR TUYÈRE SECONDAIRE CONVERGENTE-DIVERGENTE**
HEIZSYSTEM FÜR SEKUNDÄRE DÜSE VOM KONVERGIERENDEN/DIVERGIERENDEN TYP
HEATING SYSTEM FOR CONVERGENT-DIVERGENT SECONDARY NOZZLE

(30) Priorité: 21.08.2017 FR 1757775; 21.08.2017 FR 1757777
(43) Date de publication de la demande: 27.02.2019
(73) Titulaire: SAFRAN AIRCRAFT ENGINES, 75015 Paris (FR)
(72) Inventeur: BODARD, Guillaume, 77550 Moissy-Cramayel (FR); GONZALEZ, Jérémy Paul Francisco, 77550 Moissy-Cramayel (FR); JODET, Norman Bruno André, 77550 Moissy-Cramayel (FR)
(74) Mandataire: Regimbeau

(56) Documents cités:
- EP-A2- 1 344 928
- WO-A1-2016/151267
- FR-A1- 2 986 832
- FR-A1- 3 009 027

## Description

### DOMAINE TECHNIQUE GENERAL

La présente invention se rapporte au domaine de la réduction du bruit pour une turbomachine à flux mélangés. Elle concerne plus particulièrement l'arrière corps d'un turboréacteur à mélangeur, où le flux primaire en sortie du moteur et le flux secondaire se mélangent à l'intérieur d'une tuyère secondaire, pour former un jet propulsé dans l'air externe.

Le domaine des turbomachines concernées est ainsi relatif aux tuyères LDMF (« *long duct mixed-flow* »), c'est-à-dire une tuyère secondaire s'étendant au-delà du mélange des flux.

L'invention concerne en particulier les solutions apportées aux problématiques d'acoustique dans le cadre de tuyère secondaire dite convergente-divergente.

### ETAT DE L'ART

Dans le cadre des tuyères dite convergente-divergente, une source de bruit vient du fait qu'une poche de Mach est présente au niveau du col de la tuyère.

En effet, l'interaction entre la turbulence issue du mélange des deux flux et les zones d'écoulement supersonique dans la tuyère est une source de bruit haute fréquence. Ce phénomène peut apparaître notamment lorsque la tuyère commence à s'amorcer.

Ce phénomène s'observe plus nettement lorsqu'un mélangeur à lobes est installé à la confluence des flux primaire et secondaire. On se réfère aux demandes FR2902469 ou EP1870588 pour les mélangeurs, ainsi qu'au document WO2015/036684 qui propose une solution à l'aide de chevrons situés sur le bord de fuite de la tuyère. Les documents FR 2 986 832, EP 1 344 928 A2, FR 3 009 027 et WO 2016/151267 A1 proposent encore d'autres solutions de réduction de bruit de tuyère.

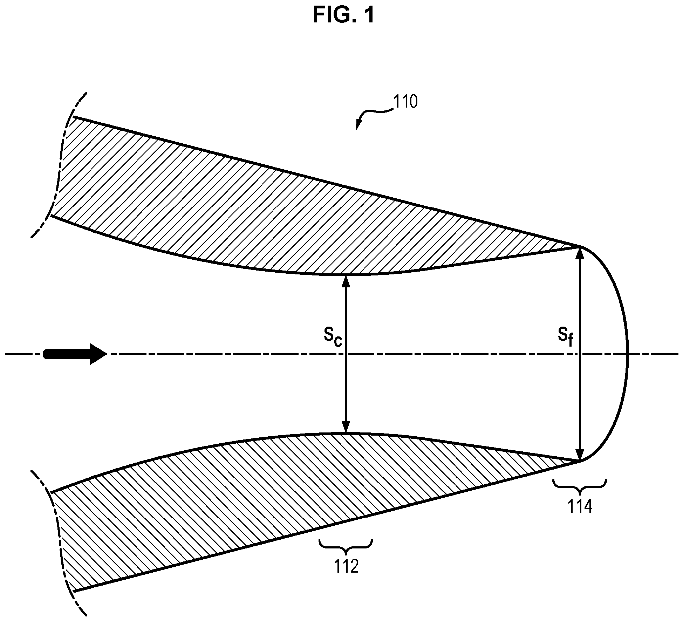

Toutefois, la présente invention se place dans le cadre des tuyères dites convergentes-divergentes. Ces dernières permettent d'améliorer les performances des tuyères à flux mélangés, notamment en augmentant la taille du convergent-divergent (ratio appelé « CVDC » et référencé classiquement A9/A8 - voir **figure 1****,** où sont illustrés une tuyère 110, un bord de fuite 114 et un col 112 et les sections respectifs S_{f}/S_{c}). Une tuyère convergente-divergente, par définition, présente une section minimale dont le positionnement axial ne coïncide pas avec l'une des extrémités du conduit. L'utilisation d'une tuyère secondaire convergente-divergente a deux avantages : elle permet de modifier sensiblement le coefficient de débit à faible taux de détente et améliorer la performance de la tuyère. Cette augmentation est bénéfique pour la performance du moteur mais elle est pénalisante acoustiquement.

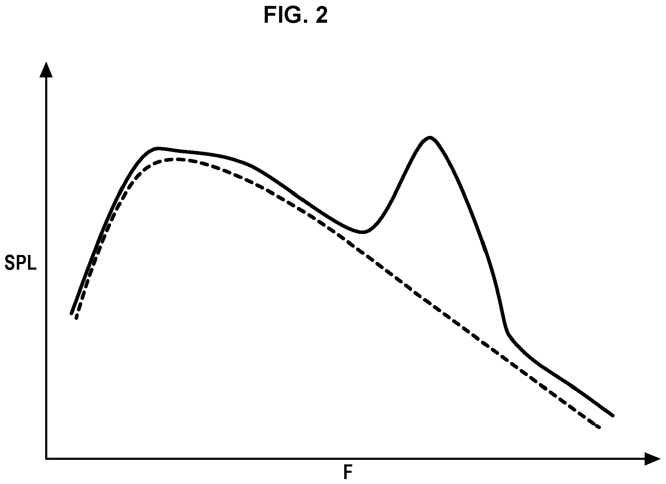

Comme indiqué précédemment, on observe au niveau du col l'apparition d'une poche de Mach (voir **figure 2****,** où les deux courbes représentent le bruit avec mélangeur en trait plein et sans mélangeur en trait pointillé - en abscisse la fréquence F et en ordonnée le niveau de pression sonore SPL pour *Sound Pressure Level,* en décibel). Les turbulences issues du mélange des deux flux et la poche de Mach provoquent l'apparition de bruits indésirables.

### PRESENTATION DE L'INVENTION

L'invention vise à réduire les conséquences acoustiques précités, dans le cadre de tuyère secondaire convergente-divergente.

Pour cela, l'invention propose un ensemble pour arrière de turbomachine à double-flux ayant un axe longitudinal, comprenant :
une tuyère secondaire définie autour de l'axe longitudinal, ladite tuyère secondaire étant configurée pour éjecter un mélange des flux issus d'une veine secondaire et d'une veine primaire de la turbomachine, la tuyère secondaire étant de forme convergente-divergente avec un col correspondant à une section minimale de la tuyère secondaire,
un système de chauffage avec un élément chauffant, l'élément chauffant étant situé sur au moins une portion de la circonférence interne de la tuyère secondaire longitudinalement au niveau du col et/ou en amont du col.

L'invention se décline sous plusieurs modes de réalisation principaux.

Dans un premier mode de réalisation, le système de chauffage comprend un système de radiateur chauffant. Ainsi, l'invention concerne un ensemble pour arrière de turbomachine à double-flux ayant un axe longitudinal, comprenant :
une tuyère secondaire définie autour de l'axe longitudinal, ladite tuyère secondaire étant configurée pour éjecter un mélange des flux issus d'une veine secondaire et d'une veine primaire de la turbomachine, la tuyère secondaire étant de forme convergente-divergente avec un col correspondant à une section minimale de la tuyère secondaire,
un système de radiateur chauffant, comprenant au moins une plaque chauffante disposée au moins sur une portion de la circonférence interne de la tuyère secondaire longitudinalement au niveau du col et/ou en amont du col.

Le premier mode de réalisation peut comprendre les caractéristiques suivantes, prises seules ou en combinaison :
- la plaque chauffante est un radiateur électrique,
- la plaque chauffante s'étend longitudinalement selon une certaine distance,
- le système de radiateur chauffant comprend une pluralité de segments chauffants espacés les uns des autres le long de la circonférence interne de la tuyère,
- l'ensemble comprend en outre une tuyère primaire définissant une portion de veine primaire, la tuyère secondaire définissant une portion de veine secondaire, et un mélangeur à lobes, en extrémité aval de la tuyère primaire et présentant une alternance de lobes chauds s'étendant à l'intérieur de la veine secondaire et de lobes froids s'étendant à l'intérieur de la veine primaire,
- l'ensemble comprend un même nombre de lobes chauds que de segments chauffants.
- les segments chauffants sont positionnés radialement en regard des lobes chauds, au décalage longitudinal près,
- la plaque chauffante s'étend en aval du col sur une distance inférieure ou égale à 20% du diamètre de la tuyère secondaire au col et/ou dans lequel le système de radiateur chauffant s'étend en amont du col sur une distance inférieure ou égale à deux fois le diamètre de la tuyère secondaire au col,
- le système de radiateur chauffant présente un gradient de chauffage sur sa surface,
- le système de radiateur chauffant est intégré dans la tuyère secondaire de façon à ce que la surface interne d'écoulement soit continue pour ne pas perturber le flux.
- le ratio entre la section au bord de fuite de la tuyère secondaire et la section au col de la tuyère secondaire est compris entre 1 et 1,05.

Le premier mode de réalisation concerne aussi une turbomachine double-flux comprenant un ensemble tel que décrit précédemment et comprenant un générateur électrique et/ou une batterie pour alimenter le système de radiateur chauffant.

Dans un second mode de réalisation, le système de chauffage est un système de diffuseur d'air chaud. Ainsi, l'invention concerne un ensemble pour arrière de turbomachine ayant un axe longitudinal, comprenant :
- une veine primaire, définie à son extrémité avale par une tuyère primaire,
- une tuyère secondaire définissant une portion de veine secondaire et où peuvent se rejoindre les flux issus de la veine secondaire et la veine primaire, la tuyère étant de forme convergente-divergente avec un col correspondant à une section minimale de la tuyère,
- un système de diffusion d'air chaud comprenant :
   un prélèvement situé dans un élément définissant une portion de la veine primaire, et configuré pour prélever du flux circulant dans la veine primaire,
   un diffuseur positionné sur une au moins une portion de la circonférence interne de la tuyère secondaire longitudinalement au niveau du col et/ou entre le bord de fuite de la veine primaire et ledit col,
   une canalisation, traversant la veine secondaire, et reliant le prélèvement au diffuseur.

Le second mode de réalisation peut comprendre les caractéristiques suivantes, prises seules ou en combinaison :
- le diffuseur comprend une grille d'éjection,
- le système de diffusion comprend des moyens de ralentissement de la vitesse de l'air disposé entre le prélèvement et le diffuseur,
- l'ensemble comprend un bras structural traversant la veine secondaire à l'intérieur duquel passe la canalisation,
- le prélèvement se situe en amont du bras structural, pour suivre le sens naturel d'écoulement,
- le prélèvement est positionné dans la tuyère primaire,
- la veine primaire comprend un étage de turbine et le prélèvement se trouve en aval de l'étage de turbine,
- le prélèvement se fait à l'aide d'une écope rétractable ou bien à l'aide d'une grille,
- le diffuseur s'étend longitudinalement selon une certaine distance,
- le diffuseur comprend une pluralité de segments diffuseur espacés les uns des autres le long de la circonférence interne de la tuyère secondaire,
- l'ensemble comprend en outre un mélangeur à lobes présentant une alternance de lobes chauds s'étendant à l'intérieur de la veine secondaire et de lobes froids s'étendant à l'intérieur de la veine primaire,
- l'ensemble comprend un même nombre de lobes chauds que de segments,
- les segments diffuseurs sont positionnés radialement en regard des lobes chauds, au décalage longitudinal près.
- le diffuseur s'étend en aval du col sur une distance inférieure ou égale à 20% du diamètre de la tuyère secondaire au col et/ou dans lequel le diffuseur s'étend en amont du col sur une distance inférieure ou égale à une fois le diamètre de la tuyère secondaire au col,
- le diffuseur est intégré dans la tuyère secondaire de façon à ce que la surface interne d'écoulement soit continue pour ne pas perturber le flux,
- le ratio entre la section au bord de fuite de la tuyère secondaire et la section au col de la tuyère secondaire est compris entre 1 et 1,05.

Le deuxième mode de réalisation concerne aussi une turbomachine double-flux comprenant un ensemble tel que décrit précédemment (deuxième mode de réalisation).

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 illustre le principe général d'une tuyère convergente-divergente,
- La figure 2 illustre des spectres de bruit (en décibel) d'une turbomachine avec et sans mélangeur à lobes,
- Les figures 3 et 4 illustrent un premier mode de réalisation de l'invention, dans le cadre d'un arrière corps avec un mélangeur,
- Les figures 5 et 6 illustrent une autre variante du premier mode de réalisation de l'invention, pour ce même cadre,
- Les figures 7 et 8 illustrent une version schématique en deux dimensions et une vue tridimensionnelle simplifiée d'un deuxième mode de réalisation de l'invention, dans le cas d'un arrière corps de turbomachine avec mélangeur,
- La figure 9 illustre une grille de diffuseur selon le deuxième mode de réalisation.

### DESCRIPTION DETAILLEE

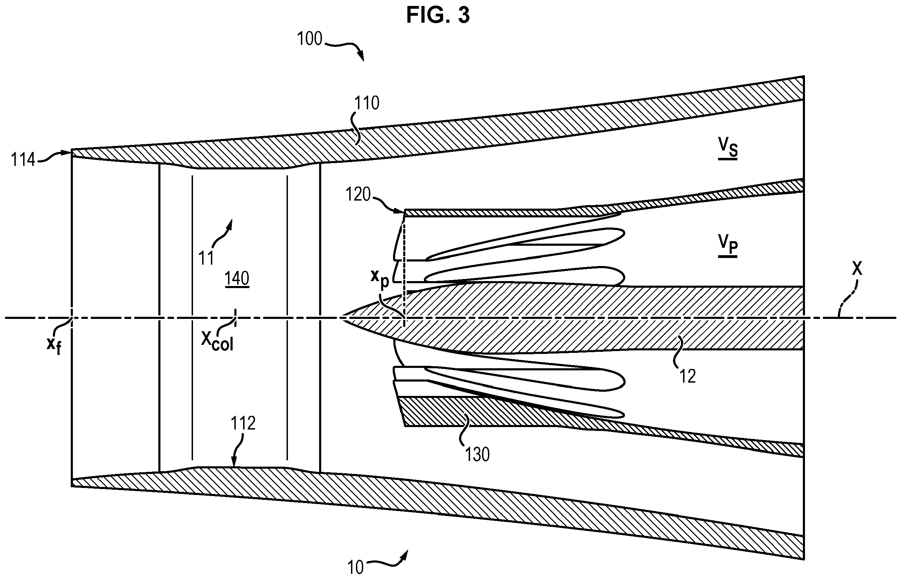

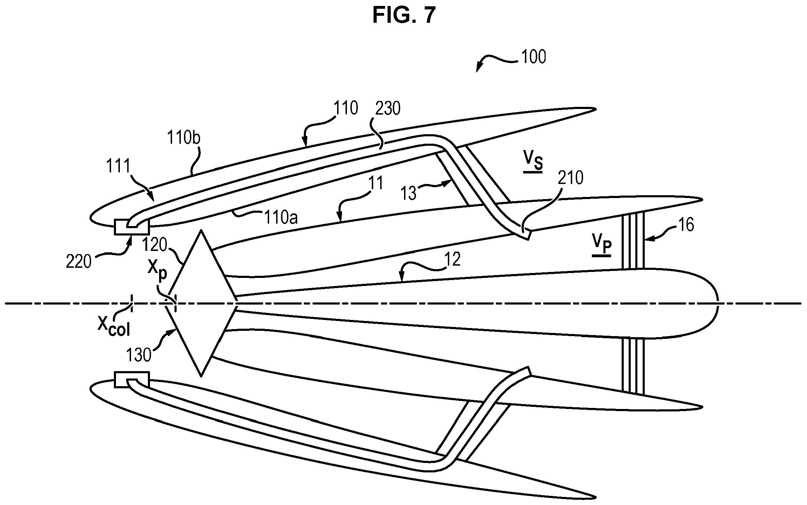

L'invention va à présent être décrite en relation avec les **figures 3 à 6** **et les** **figures 7 à 9****.**

L'arrière corps de turbomachine 100 concerné appartient à une turbomachine 10 à double-flux, comprenant une veine primaire Vp et une veine secondaire Vs. On parlera de veine pour le volume au travers duquel circule un flux. Dans la veine primaire Vp circule donc le flux primaire et dans la veine secondaire Vs circule donc le flux secondaire.

La turbomachine 10 est agencée autour d'un axe longitudinal X. On définit l'abscisse comme la position le long de cet axe longitudinal X.

Au sein de la veine primaire Vp, la turbomachine 10 comprend des éléments classiques connus de l'homme du métier, comme un ou plusieurs étages de compression, une chambre de combustion et enfin un ou plusieurs étages de turbines, qui entrainent notamment les compresseurs et aussi un fan, qui permet d'alimenter la veine secondaire Vs et fournit l'essentiel de la poussée. A l'extrémité avale, la veine primaire Vp est définie par une tuyère primaire 11, qui permet l'éjection du flux primaire. La tuyère primaire 11 peut être formée de plusieurs pièces distinctes.

De la même façon, au sein de la veine secondaire Vs, la turbomachine 10 intègre des éléments classiques connus de l'homme du métier. En particulier, à l'extrémité avale, la veine secondaire est définie par une tuyère 110, dite tuyère secondaire. Dans le cas des turbomachines LDMF, elle s'étend en aval au-delà de la tuyère primaire 11. Par conséquent, la tuyère secondaire 110 éjecte le flux secondaire, mélangé au flux primaire.

Cette tuyère secondaire 110 est convergente-divergente. Comme indiqué en introduction, cela signifie que le rayon (ou le diamètre) de la tuyère diminue puis augmente à nouveau, dans le sens d'écoulement du flux. La conséquence directe est que la section d'écoulement diminue puis augmente à nouveau.

On appelle « col » 112 de la tuyère secondaire la partie de la tuyère 110, à une abscisse x_{col}, où cette section est minimale.

Le ratio de convergence-divergence est typiquement compris entre 100% et 105% (ratio de la section au bord de fuite 114 sur la section au col 112 : S_{f}/S_{c}).

La tuyère 110 est généralement formée d'une paroi interne 110a et d'un capot externe 110b, qui définissent un volume 111 entre eux.

L'arrière corps de turbomachine 100 peut comporter en outre un corps central 12 limitant l'extension radiale de la veine primaire à l'intérieur de la tuyère 110. Ce corps central 12 n'est pas concerné par l'invention. Il est situé sur l'axe longitudinal X et s'arrête généralement après un bord de fuite 120 de la tuyère.

La tuyère primaire 11 comprend donc un bord de fuite 120, à une abscisse xₚ en amont de l'abscisse x_{col}. Le corps central 12, s'il est présent, s'étend au-delà longitudinalement du bord de fuite 120, c'est-à-dire en aval de l'abscisse xₚ.

Ce bord de fuite 120 peut avoir, dans une section orthogonale à l'axe X, une forme circulaire.

Alternativement, comme illustré sur les **figures 3 à 6** **et** **8**, la tuyère primaire 11 peut se terminer par un mélangeur à lobes 130 qui a pour fonction, comme indiquée en introduction, de mélanger les flux primaires et secondaires avant qu'ils ne soient complètement éjectés de la tuyère secondaire 110. En référence à la **figure 3****,** le mélangeur à lobes 130 est une pièce profilée prolongeant à l'intérieur de la tuyère secondaire 110, les parois définissant à l'intérieur la veine primaire Vp et à l'extérieur la veine secondaire Vs. Les mélangeurs peuvent avoir les lobes symétriques et périodiques, ou bien non symétriques et/ou non périodiques. L'épaisseur du bord de fuite 120 du mélangeur 130 est généralement faible pour éviter un effet de culot entre les deux flux. Le mélangeur à lobes 130 s'arrête généralement à une distance significative de l'extrémité aval de la tuyère secondaire 110 pour permettre au mélange de flux de s'homogénéiser. On rappelle que l'invention se place dans les cadres des turbomachines LDMF (« *long duct* - *mixed flow* »)*.*

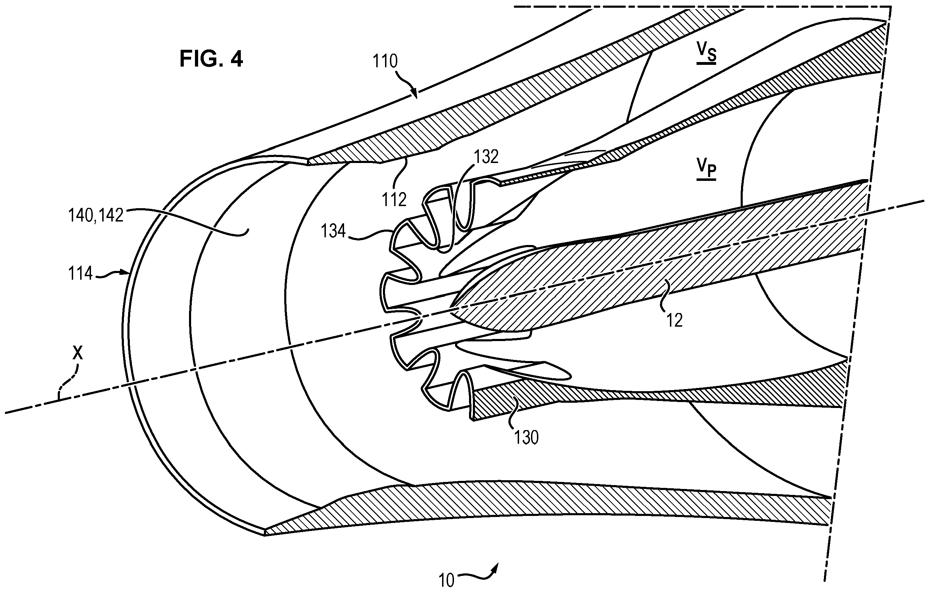

Comme visible sur les **figures 4****,** **5****,****6** **et** **8****,** un exemple de mode de réalisation du mélangeur 130 est constitué avec des lobes symétriques, périodiques en azimut autour de l'axe longitudinal X. Sur cet exemple, la ligne de bord de fuite 120 a une forme tridimensionnelle ondulée en azimut et régulière qui passe périodiquement par un point bas 132 de rayon minimum et un point haut 134 de rayon maximum. La forme du mélangeur est préférentiellement obtenue en rejoignant cette ligne de bord de fuite 120 par des surfaces régulières lisses, d'un côté à la section circulaire de la paroi extérieure de la tuyère primaire 11, de l'autre côté à la section circulaire de la paroi intérieure de veine secondaire Vs. Des moyens connus permettent à l'homme du métier d'obtenir ces surfaces lisses en définissant des lois régulières de variation de rayon pour joindre les sections d'entrée au bord de fuite 120 du mélangeur à lobes 130.

Sur l'exemple présenté, les évolutions du bord de fuite 120 du mélangeur 130 sont périodiques. De cette manière, la surface moyenne entre la paroi radialement externe et la paroi radialement interne du mélangeur 130 fait des ondulations périodiques en azimut autour de l'axe longitudinal X qui créent, du côté du flux primaire sous les points hauts 134 du bord de fuite 120, des lobes divergents (dits lobes chauds et référencés 134 par simplification), et créent, du côté du flux secondaire au-dessus des points bas 132 du bord de fuite 120, des lobes convergents (dit lobes froids et référencés 132 par simplification).

Sur l'exemple présenté, l'abscisse xₚ sur l'axe longitudinal X qui détermine l'extension maximale du mélangeur à lobes en aval correspond aux points haut des lobes chauds. Par l'abscisse xₚ passe un plan d'éjection, c'est-à-dire un plan à partir duquel le flux d'air est éjecté des lobes chauds. Pour des raisons de simplicité, lorsque des considérations positionnement sont impliquées, on considérera que le bord de fuite correspond au point haut des lobes chauds. Ainsi, le plan comprenant le bord de fuite d'une tuyère primaire sans mélangeur est identique au plan d'éjection du mélangeur. Cet exemple de réalisation de mélangeur, comporte dix-huit lobes chauds symétriques autour du plan axial passant par leur milieu et répartis de manière périodique.

Dans un autre mode de réalisation de l'invention, on peut envisager de définir un mélangeur à lobes 130 en modifiant son extension axiale, le taux de pénétration des lobes (déterminé essentiellement par les rayons des points hauts 134 et bas 132 du bord de fuite 120), la forme de ce bord de fuite 120, ainsi que le nombre de lobes. Les lobes peuvent également ne pas présenter de plans axiaux de symétrie. De même, bien que la répartition des lobes soit essentiellement périodique, cette périodicité peut être localement affectée en modifiant la forme de certains lobes, par exemple pour adapter le mélangeur 130 à un passage de pylône.

Le mélangeur à lobe 130 favorise le mélange des flux primaire Vp et secondaire Vs dans la veine à l'intérieur de la tuyère secondaire 110, notamment en provoquant des cisaillements et des tourbillons à l'interface entre les flux.

A présent que le cadre général a été décrit, les moyens de l'invention vont être explicités.

La tuyère secondaire 110 comprend un système de chauffage avec un élément chauffant. L'élément chauffant est situé sur au moins une portion de la circonférence interne de la tuyère secondaire, dans une position longitudinale au niveau du col 112, voire en amont du col 112 (ou les deux).

Ce système de chauffage permet de chauffer localement l'air et faire diminuer le bruit. Deux modes de réalisation particuliers, qui détaillent les avantages, vont être présentés : dans le premier mode de réalisation, le système de chauffage comprend un système de radiateur chauffant (et l'élément chauffant est une plaque chauffante) et dans le deuxième mode de réalisation, le système de chauffage comprend un système de diffusion d'air chaud (et l'élément chauffant est un diffuseur d'air).

Premier mode de réalisation **(****figures 3 à 6****)**

La tuyère secondaire 110 comprend un système de radiateur chauffant 140 qui sert à réchauffer le flux traversant la tuyère 110, et plus spécifiquement le flux d'air qui traverse la ou les poches de Mach situé au niveau du col 112, à proximité de la paroi interne de la tuyère 110. Il s'agit donc d'un système actif.

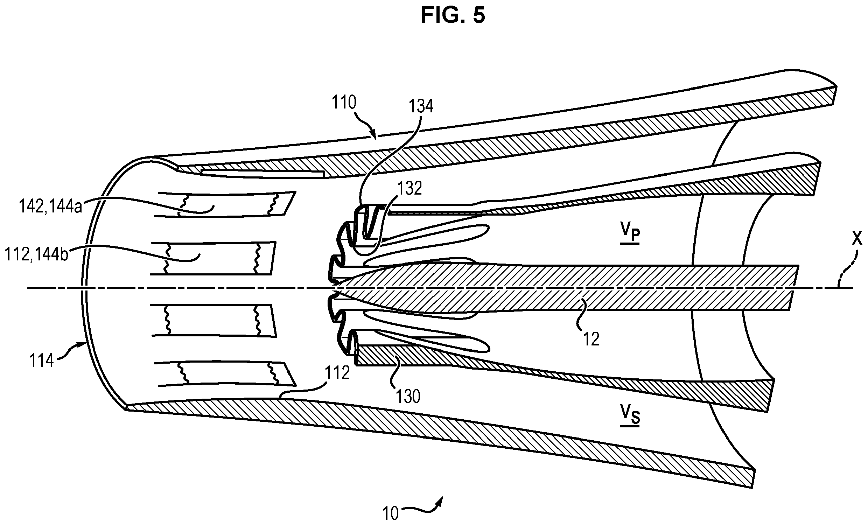

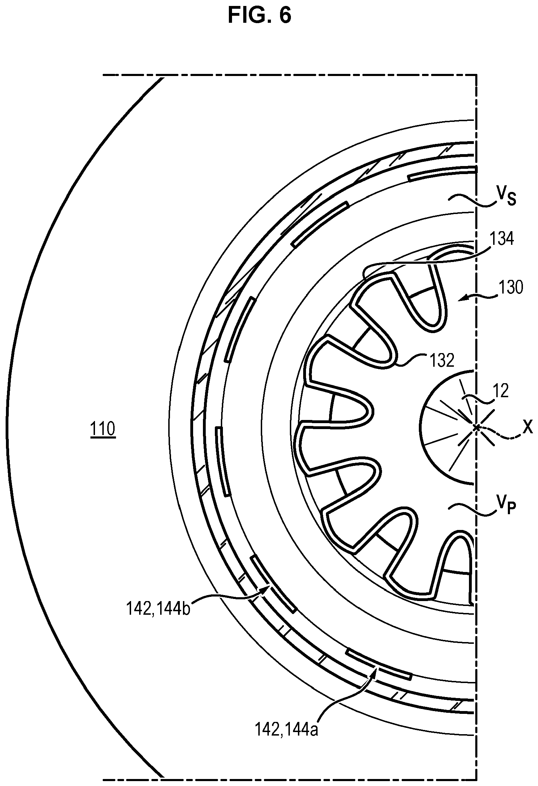

Le système de radiateur chauffant 140 comprend une ou plusieurs plaques chauffantes 142 positionnées sur une portion au moins de la circonférence interne de la tuyère secondaire 110, soit sur toute la circonférence **(****figures 3** **et** **4****),** soit partiellement **(****figures 5** **et** **6** par exemple). Le terme de plaque vise un élément, qui, lorsque posé à plat, présente une épaisseur faible par rapport à ses autres dimensions principales.

Ces plaques 142 permettent une intégration optimale du système de radiateur chauffant 140 sur la paroi interne de la tuyère secondaire 110 sans perturber l'écoulement du flux d'air.

Longitudinalement, la ou les plaques chauffantes 142 se situent au niveau du col 112, ou en amont du col 112, c'est à dire entre ledit col 112 et le bord de fuite 120 de la tuyère primaire 11.

Le but est que le sillage pénétrant la poche de Mach soit réchauffé, de façon à limiter les effets acoustiques. Pour cette raison, comme la poche de Mach se situe juste en aval du col 112, il n'est pas utile que les plaques 142 s'étendent beaucoup en aval du col 112. Une extension longitudinale en aval du col longueur inférieure à 0,2xD_{col}, où D_{col} est le diamètre de la tuyère 110 à l'abscisse x_{col}, est préférable.

Comme indiqué précédemment, la ou les plaques chauffantes 142 peuvent être positionnées en amont du col 112. Dans cette configuration, on privilégie une ou des plaques chauffantes 220 qui ne s'étendent pas longitudinalement plus en amont que 2xD_{col} à partir du col 112.

Inversement, réchauffer en amont du col 112 permet d'échauffer le flux pour la poche de Mach. La ou les plaques chauffantes 142 peuvent ainsi s'étendre longitudinalement, depuis le col 112, jusqu'à 2xD_{col} en amont.

Les plaques chauffantes 142 peuvent être réalisées de plusieurs façons. Un mode préférentiel consiste à les doter de résistances électriques qui génèrent de la chaleur lorsqu'un courant électrique les traversent. Les plaques peuvent alors rendre la forme de grille constitués de filament chauffants. Les plaques chauffantes 142 consistent donc en un radiateur électrique.

L'alimentation en électricité se fait par exemple depuis un générateur entrainé par un boitier d'entrainement des accessoires (« AGB » pour « *accessory gearbox* ») qui prélève de la puissance sur un arbre de la turbomachine. Des batteries peuvent être prévues, pour alimenter les plaques chauffantes 142 en l'absence de disponibilité du générateur.

Un mode de réalisation particulier du système de radiateur chauffant 140 est lié à la présence du mélangeur à lobe 130.

Le mélangeur à lobe 130, qui présente des lobes chauds 134 et des lobes froids 132, provoque différents sillages qui ne suivent pas le même parcours. En l'espèce, il s'agit surtout de la zone entre les sillages issus des lobes chauds 134 et la tuyère secondaire 110 qui ont besoin d'être réchauffés par le système de radiateur chauffant 140.

Pour cela, afin d'économiser de l'énergie et d'optimiser la mise en place du système de radiateur chauffant, ce dernier peut comprendre une pluralité de segments chauffants 144a, 144b, disposés à distance les uns des autres sur différentes portions de la circonférence de la tuyère 110 (voir **figures 5** **et** **6**)**.** Chaque segment chauffant 144a, 144b est situé en regard d'un lobe chaud 134. Cela signifie que, au décalage longitudinal près (comme illustré sur la **figure 6****,** où les segments chauffants 144a, 144b et le mélangeur 130 sont placés dans un même plan), il y a un segment chauffant 144a, 144b situé dans le prolongement radial d'un lobe chaud 134. En d'autres termes, les segments chauffants 144a, 144b et les lobes chauds 134 sont aux mêmes azimuts.

La largeur du segment 144a, 144b peut être égale à une projection radiale du lobe sur la circonférence interne de la tuyère secondaire 110 (c'est-à-dire par projection orthogonale depuis un point de l'axe longitudinal X), ou bien égale à la largeur du lobe ou bien toute dimension du même ordre de grandeur (pour autant que les segments soient suffisamment étroits pour s'assurer qu'ils sont espacés les uns des autres, voir **figure 6**)**.**

En tout état de cause, on privilégie les assemblages symétriques, c'est-à-dire que le sommet du lobe chaud 134 est radialement aligné avec le centre du segment chauffant 144a, 144b correspondant.

On compte ainsi préférablement autant de segments chauffants 144a, 144b que de lobes chauds 132.

Chaque segment peut être composé d'une ou plusieurs plaques 142, en fonction de la taille des plaques et des segments 144a, 144b.

Cette configuration évite d'utiliser de l'énergie pour chauffer la zone en regard des lobes froids dont le sillage ne vient pas impacter la poche de mach.

Dans un mode de réalisation particulier visant à préserver l'intégrité structurelle de la tuyère secondaire 110, les plaques chauffantes 142, ou la pluralité de plaques chauffantes 142 peuvent présenter un gradient de température pour éviter l'échauffement du matériau sur lequel elles sont placés. Le gradient consiste à avoir une température plus importante au centre qu'à la périphérie.

Une augmentation de la température localement de 50°K permet par exemple de faire baisser le Mach entre 0,90 et 0,95, par rapport à un Mach de 1 pour une température de 320°K.

Deuxième mode de réalisation **(****figures 7 à 9****)**

L'arrière corps de turbomachine 10 comprend un système de diffusion d'air chaud 200 dans la tuyère secondaire 110 qui sert à réchauffer le flux traversant la tuyère secondaire 110, et plus spécifiquement le flux d'air qui traverse la ou les poches de Mach situé au niveau du col 112, à proximité de la paroi interne de la tuyère 110.

Ce système 200 comprend plusieurs éléments.

Un prélèvement 210 est prévu, dans la veine primaire Vp, afin de prélever une fraction du flux primaire. Le flux primaire est chaud.

Un diffuseur 220 est prévu, sur au moins une portion d'une circonférence interne de la tuyère 110. Longitudinalement, le diffuseur se situe au niveau du col 112, ou en amont du col 112, c'est à dire entre ledit col 112 et le bord de fuite 120 de la veine primaire Vp (c'est-à-dire le plan d'éjection du mélangeur 130 lorsqu'il y en a un).

Enfin, une canalisation 230 permet de relier fluidiquement le prélèvement 210 dans la veine primaire Vp au diffuseur 220 de la tuyère 110. La canalisation 230 traverse la veine secondaire Vs.

Ce système de diffusion 220 a pour unique fonction de réchauffer l'air, et non pas de perturber l'écoulement, comme les solutions dit « micro-jets » le proposent (voir FR3016411 ou FR2975135). Il ne s'agit pas donc pas d'un système « d'injection », qui sous-entend que le flux injecté vient perturber volontairement l'écoulement, mais de « diffusion ».

Une pluralité de prélèvement 220 peut être prévue, réparties sur une circonférence de la veine primaire Vp. Cela permet de mieux répartir le prélèvement et la diffusion dans le diffuseur 220. De la même façon, une pluralité de canalisation 230 est prévue.

Afin de limiter au maximum les perturbations aérodynamiques, la canalisation 230 passe par un bras structural 13. La canalisation se prolonge ensuite dans le volume 111 entre la paroi interne 110a et le capot externe 110b de la tuyère 110. Lorsqu'une pluralité de canalisations 130 est prévue, elles peuvent passer au travers d'une pluralité d'arbres structuraux 13, soit en nombre égal, soit en nombre inférieur, en regroupant les flux de plusieurs prélèvements au sein de la même canalisation 130 si on souhaite prévoir davantage de prélèvements 210 qu'il n'y a d'arbres structuraux 13.

Toujours dans le même but de ne pas perturber l'écoulement du flux dans la tuyère, le diffuseur 220 est intégré dans la tuyère 110 afin que sa présence physique ne perturbe pas l'écoulement du flux d'air.

Des moyens d'obturation sont prévus pour bloquer le prélèvement, de sorte qu'il s'agit d'un système actif. En effet, il est préférable de pouvoir désactiver ce système lors des phases de croisière. Les moyens d'obturation sont préférablement disposés au niveau du prélèvement 210, afin d'obturer l'entrée du conduit 230 pour ne pas générer de phénomènes d'impasse.

Le diffuseur peut s'étendre sur toute la circonférence interne de la tuyère, néanmoins, il peut ne s'étendre que sur des portions de la circonférence interne, dans les zones spécifiques (voir infra). Longitudinalement, il s'étend sur une certaine distance.

Le but est que la zone de contact entre les sillages des lobes chauds du mélangeur et les poches de mach soit réchauffée, de façon à limiter les effets acoustiques. Pour cette raison, comme la poche de Mach se situe au niveau du col 112, il n'est pas utile que les diffuseurs 220 s'étendent beaucoup en aval du col 112. Une extension longitudinale en aval du col longueur inférieure à 0,2xD_{col}, où D_{col} est le diamètre de la tuyère 110 à l'abscisse x_{col}, est préférable.

Inversement, réchauffer en amont du col 112 permet d'échauffer le flux pour la poche de Mach. Les diffuseurs 220 peuvent ainsi s'étendre longitudinalement, depuis le col 112, jusqu'à 1xD_{col} en amont ou moins.

Comme indiqué précédemment, le diffuseur 220 peut être positionné en amont du col 112. Dans cette configuration, on privilégie un diffuseur 220 qui ne s'étend pas longitudinalement plus en amont que 1xD_{col} à partir du col 112. Préférablement, on implémente un diffuseur qui diffuse sur le col et en amont du col, jusqu'à 1xD_{col} en amont du col 112.

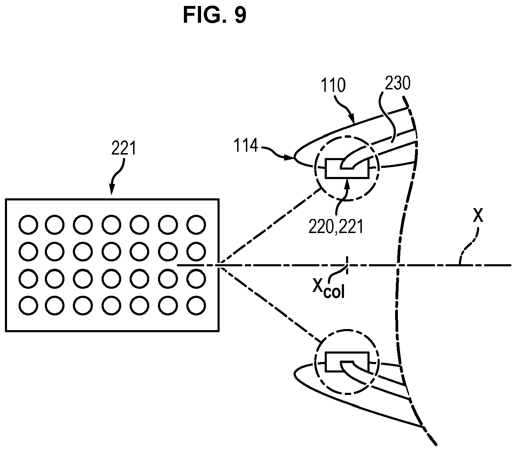

Le diffuseur 220 a pour fonction de réchauffer l'air en injectant un air plus chaud, sans perturber l'écoulement. En effet, le diffuseur 220 ne fonctionne pas comme une buse. Dans un mode de réalisation commode, le diffuseur 220 comprend une grille 221, constitué d'une pluralité d'orifices (voir **figure 9**)**.** Cette pluralité d'orifices permet de répartir la diffusion d'air et le diffuser dans la veine de la tuyère 110.

Le dimensionnement du prélèvement 210 et du diffuseur 220, dont la section efficace est largement supérieure à celle du prélèvement 210 assure une diminution importante de la vitesse du flux d'air.

Si cela n'est pas suffisant, afin d'éviter tout effet d'injection forcée, le système de diffusion 200 peut comprendre des moyens de ralentissement du flux d'air, comme des grilles internes, des chicanes ou autres, par exemple ménagés à l'intérieur de la canalisation 230.

Le prélèvement d'air 210 au sein du flux primaire Vp doit être le plus faible possible. Il est déterminé en fonction de sa position longitudinale, de la surface du diffuseur 220 et de l'élévation de température souhaité au niveau de la poche de Mach (à une température externe fixée).

Le prélèvement d'air 210 peut être effectué à divers emplacements longitudinaux de la turbomachine.

Le prélèvement 210 se fait en amont du bord de fuite de la veine primaire Vp. Lorsqu'un mélangeur 130 est prévu, le prélèvement 210 se fait en amont du mélangeur, i.e. en amont du début des lobes chauds et froids.

Préférablement, la distance longitudinale entre le bord de fuite de la veine primaire Vp (c'est-à-dire le plan d'éjection lorsqu'il y a un mélangeur 130) et le prélèvement est supérieure à la distance longitudinale entre le bord de fuite de la veine primaire Vp (ou le plan d'éjection) et le col 112.

Dans un mode de réalisation, le prélèvement se situe en aval d'un étage de turbine. Pour cela, il peut être en aval de la turbine basse-pression, ou en entre la turbine basse-pression et la turbine haute-pression. Ici, l'air sort de la chambre de combustion : il est donc chaud.

Dans un autre mode de réalisation, le prélèvement peut se faire dans les étages de compression, où l'air est chauffé du fait de la compression. Alternativement, l'air peut être prélevé dans des zones plus froides. On dispose alors un échangeur pour le réchauffer (à huile ou électrique).

Dans un mode de réalisation, le prélèvement d'air 210 se fait simplement par une ouverture dans un élément formant la veine primaire Vp, avec préférablement une grille. La pression étant supérieure dans le flux primaire à la pression au niveau du diffuseur 220, l'air va naturellement circuler.

Dans un autre mode de réalisation, le prélèvement d'air 210 se fait avec une écope située dans un élément formant la veine primaire Vp, c'est-à-dire une pièce s'étendant à l'intérieur de la veine primaire Vp, dans le flux primaire, et entraine une fraction du flux vers la canalisation 230.

Afin de rendre le système actif, c'est-à-dire notamment désactivable, des moyens de désactivation du prélèvement peuvent être prévus, soit sous la forme d'un obturateur de l'ouverture, soit sous la forme d'une écope rétractable, pour s'intégrer dans l'élément formant la veine primaire Vp. Les moyens de désactivation peuvent ainsi faire office de moyens de blocage précités.

Un mode de réalisation particulier du système de diffusion, et plus particulièrement des diffuseurs 220 est lié à la présence du mélangeur à lobe 130.

Le mélangeur à lobe 130, qui présente des lobes chauds 134 et des lobes froids 132, provoque différents sillages qui ne suivent pas le même parcours. En l'espèce, il s'agit surtout des sillages issus des lobes chauds 134 qui ont besoin d'être réchauffés par le système de chauffage.

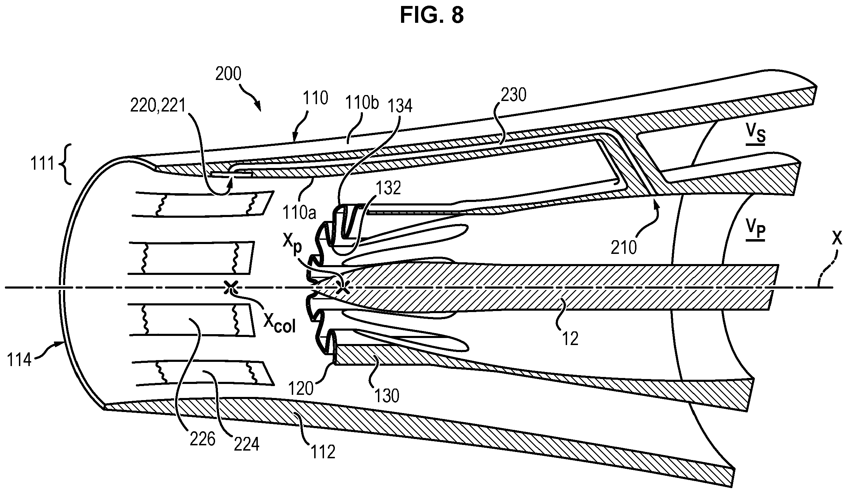

Pour cela, afin d'économiser de l'énergie et d'optimiser la mise en place du système de diffusion d'air chaud ce dernier peut comprendre une pluralité de segments diffuseurs 224, 226, disposés à distance les uns des autres sur la circonférence de la tuyère 110 (voir **figure 8**). Chaque segment diffuseur 224, 226 est situé en regard d'un lobe chaud 134. Cela signifie que, au décalage longitudinal près, il y a un segment diffuseur 224 situé dans le prolongement radial d'un lobe chaud 134. En d'autres termes, les segments diffuseurs 224 et les lobes chauds 134 sont aux mêmes azimuts.

La largeur du segment diffuseur 224, 226 peut être égale à une projection radiale du lobe sur la circonférence interne de la tuyère (c'est-à-dire par projection orthogonale depuis un point de l'axe longitudinal X), ou bien environ égale à la moitié de cette projection radiale, ou bien encore égale à la largeur du lobe ou bien toute dimension du même ordre de grandeur (pour autant que les segments soit suffisamment étroits pour s'assurer qu'ils sont espacés les uns des autres, voir **figure 8**).

En tout état de cause, on privilégie les assemblages symétriques, c'est-à-dire que le sommet du lobe chaud 134 est radialement aligné avec le centre du diffuseur 224.

On compte ainsi préférablement autant de segments diffuseurs 224, 226 que de lobes chauds 134.

Cette configuration évite d'utiliser de l'énergie pour chauffer le sillage issu des lobes froids, qui sont moins générateurs de bruits dans les poches de Mach.

### Compléments

Une augmentation de la température localement de 50°K permet par exemple de faire baisser le Mach entre 0,90 et 0,95, par rapport à un Mach de 1 pour une température de 320°K.

Le système de chauffage (radiateur chauffant 140 ou système de diffusion 200) présenté permet de gagner jusqu'à 1 EPNdB en cumulé.

Le système de chauffage (radiateur chauffant 140 ou système de diffusion 200) peut être activé sur les points de certification acoustique et désactivé lors des phases de croisière, pour ne pas impacter la performance du moteur, notamment en phase de croisière. En réchauffant au col et généralement en amont du col, on obtient un effet progressif performant et le risque de bruit parasite est diminué.

Enfin, le système de chauffage (radiateur chauffant 140 ou système de diffusion 200) peut être utilisé avec tout type de bord de fuite de tuyère secondaire. En effet, celui-ci n'étant pas disposé en aval du col (ou d'une façon limitée), les différentes technologies de bord de fuite de tuyère, comme les chevrons décrits dans le document WO2015/036684 peuvent être implémentés sans difficulté pour améliorer encore les performances acoustiques de la turbomachine.

## Revendications

1. Ensemble pour arrière de turbomachine à double-flux (10) ayant un axe longitudinal (X), comprenant :
- une tuyère secondaire (110) définie autour de l'axe longitudinal (X), ladite tuyère secondaire étant configurée pour éjecter un mélange des flux issus d'une veine secondaire (Vs) et d'une veine primaire (Vp) de la turbomachine (10), la tuyère secondaire étant de forme convergente-divergente avec un col (112) correspondant à une section minimale de la tuyère secondaire (110),
**caractérisé en ce que** l'ensemble comprend en outre un système de chauffage (140, 200) avec un élément chauffant, l'élément chauffant étant situé sur au moins une portion de la circonférence interne de la tuyère secondaire longitudinalement au niveau du col et/ou en amont du col (112).

2. Ensemble selon la revendication 1, dans lequel le système de chauffage comprend un système de radiateur chauffant (140), comprenant au moins une plaque chauffante (142) disposée au moins sur une portion de la circonférence interne de la tuyère secondaire (110) longitudinalement au niveau du col (112) et/ou en amont du col (112).

3. Ensemble selon la revendication 2, dans lequel la plaque chauffante (142) est un radiateur électrique.

4. Ensemble selon l'une quelconque des revendications 2 à 3, dans lequel le système de radiateur chauffant (140) comprend une pluralité de segments chauffants (144a, 144b ...) espacés les uns des autres le long de la circonférence interne de la tuyère (110).

5. Ensemble selon l'une quelconque des revendications 2 à 4, comprenant en outre :
- une tuyère primaire (11) configurée pour définir une portion de veine primaire (Vp), la tuyère secondaire (110) configurée pour définir une portion de veine secondaire (Vs),
- un mélangeur à lobes (130), en extrémité aval de la tuyère primaire (11) et présentant une alternance de lobes chauds (134) configurés pour s'étendre à l'intérieur de la veine secondaire (Vs) et de lobes froids (132) configurés pour s'étendre à l'intérieur de la veine primaire (Vp).

6. Ensemble selon la revendication 5, dans lequel les segments chauffants (144a, 144b) sont positionnés radialement en regard des lobes chauds (134), au décalage longitudinal près.

7. Ensemble selon l'une quelconque des revendications 2 à 6, dans lequel la plaque chauffante (130) s'étend en aval du col sur une distance inférieure ou égale à 20% du diamètre de la tuyère secondaire (110) au col (112) et/ou dans lequel le système de radiateur chauffant s'étend en amont du col sur une distance inférieure ou égale à deux fois le diamètre de la tuyère secondaire (110) au col (112).

8. Ensemble selon l'une quelconque des revendications 2 à 7, dans lequel le système de radiateur chauffant (140) présente un gradient de chauffage sur sa surface.

9. Ensemble selon l'une quelconque des revendications 2 à 8, dans lequel le système de radiateur chauffant (140) est intégré dans la tuyère secondaire (110) de façon à ce que la surface interne d'écoulement soit continue pour ne pas perturber le flux.

10. Ensemble selon la revendication 1, comprenant en outre une tuyère primaire configurée pour définir une portion de la veine primaire (Vp), et dans lequel
- la veine secondaire est configurée pour définir une portion de veine secondaire (Vs) et où peuvent se rejoindre les flux issus de la veine secondaire (Vs) et la veine primaire (Vp),
- le système de chauffage comprend un système de diffusion (200) d'air chaud comprenant
un prélèvement (210) configuré pour être situé dans un élément définissant une portion de la veine primaire (Vp), et configuré pour prélever du flux circulant dans la veine primaire (Vp),
un diffuseur (220) positionné sur au moins une portion de la circonférence interne de la tuyère secondaire (110) longitudinalement au niveau du col (112) et/ou entre le bord de fuite (120) de la veine primaire (Vp) et ledit col (112),
une canalisation (230), configurée pour traverser la veine secondaire (Vs), et reliant le prélèvement (210) au diffuseur (220).

11. Ensemble selon la revendication 10, dans lequel le diffuseur (220) comprend une grille d'éjection (221).

12. Ensemble selon l'une quelconque des revendications 10 à 11, dans lequel le système de diffusion (200) comprend des moyens de ralentissement de la vitesse de l'air disposé entre le prélèvement (210) et le diffuseur (220).

13. Ensemble selon l'une quelconque des revendications 10 à 12, comprenant un bras structural (14) configuré pour traverser la veine secondaire (Vs) à l'intérieur duquel passe la canalisation (230).

14. Ensemble selon la revendication 13, dans lequel le prélèvement (210) est configuré pour être situé en amont du bras structural (13), pour suivre le sens naturel d'écoulement.

15. Ensemble selon l'une quelconque des revendications 10 à 14, dans lequel le prélèvement (220) se fait à l'aide d'une écope rétractable ou bien à l'aide d'une grille.

16. Ensemble selon l'une quelconque des revendications 10 à 15, dans lequel le diffuseur (220) comprend une pluralité de segments diffuseurs (224, 226) espacés les uns des autres le long de la circonférence interne de la tuyère secondaire (110).

17. Ensemble selon l'une quelconque des revendications 10 à 16, comprenant en outre un mélangeur à lobes (130) présentant une alternance de lobes chauds (134) configurés pour s'étendre à l'intérieur de la veine secondaire (Vs) et de lobes froids (132) configurés pour s'étendre à l'intérieur de la veine primaire (Vp).

18. Ensemble selon les revendications 16 et 17, dans lequel les segments diffuseurs (224, 226) sont positionnés radialement en regard des lobes chauds (134), au décalage longitudinal près.

19. Ensemble selon l'une quelconque des revendications 10 à 18, dans lequel le diffuseur (220) s'étend en aval du col sur une distance inférieure ou égale à 20% du diamètre de la tuyère secondaire (110) au col (112) et/ou dans lequel le diffuseur (220) s'étend en amont du col sur une distance inférieure ou égale à une fois le diamètre de la tuyère secondaire (110) au col (112).

20. Ensemble selon l'une quelconque des revendications 10 à 19, dans lequel le diffuseur (220) est intégré dans la tuyère secondaire (110) de façon à ce que la surface interne d'écoulement soit continue pour ne pas perturber le flux.

21. Ensemble selon l'une quelconque des revendications 10 à 20, dans lequel le ratio entre la section au bord de fuite (114) de la tuyère secondaire (110) et la section au col (112) de la tuyère secondaire (110) est compris entre 1 et 1,05.

22. Turbomachine double-flux (10) comprenant un ensemble selon l'une quelconque des revendications 1 à 21.

23. Turbomachine double-flux (10) comprenant un ensemble selon l'une quelconque des revendications 1 à 8 et comprenant un générateur électrique et/ou une batterie pour alimenter le système de radiateur chauffant (140).

## Patentansprüche

1. Einheit für Heck einer Doppelstrom-Strömungsmaschine (10) mit einer Längsachse (X), umfassend:
- eine sekundäre Düse (110), die um die Längsachse (X) definiert ist, wobei die sekundäre Düse ausgelegt ist, um ein Gemisch der Ströme aus einem sekundären Kanal (Vs) und einem primären Kanal (Vp) der Strömungsmaschine (10) auszustoßen, wobei die sekundäre Düse konvergierend-divergierender Form mit einem Kragen (112) ist, der einem minimalen Querschnitt der sekundären Düse (110) entspricht,
**dadurch gekennzeichnet, dass** die Einheit ferner ein Heizsystem (140, 200) mit einem Heizelement umfasst, wobei sich das Heizelement auf mindestens einem Abschnitt des Innenumfangs der sekundären Düse längs im Bereich des Kragens und/oder dem Kragen (112) vorgelagert befindet.

2. Einheit nach Anspruch 1, wobei das Heizsystem ein Heizstrahlersystem (140) umfasst, umfassend mindestens eine Heizplatte (142), die mindestens auf einem Abschnitt des Innenumfangs der sekundären Düse (110) längs im Bereich des Kragens (112) und/oder dem Kragen (112) vorgelagert angeordnet ist.

3. Einheit nach Anspruch 2, wobei die Heizplatte (142) ein elektrischer Strahler ist.

4. Einheit nach einem der Ansprüche 2 bis 3, wobei das Heizstrahlersystem (140) eine Vielzahl von Heizsegmenten (144a, 144b ...) umfasst, die entlang des Innenumfangs der Düse (110) voneinander beabstandet sind.

5. Einheit nach einem der Ansprüche 2 bis 4, ferner umfassend:
- eine primäre Düse (11), die ausgelegt ist, um einen Abschnitt eines primären Kanals (Vp) zu definieren, die sekundäre Düse (110), die ausgelegt ist, um einen Abschnitt eines sekundären Kanals (Vs) zu definieren,
- einen Mischer mit Ausbuchtungen (130) am nachgelagerten Ende der primären Düse (11) und aufweisend eine Abfolge warmer Ausbuchtungen (134), die ausgelegt sind, um sich im Inneren des sekundären Kanals (Vs) zu erstrecken, und kalter Ausbuchtungen (132), die ausgelegt sind, um sich im Inneren des primären Kanals (Vp) zu erstrecken.

6. Einheit nach Anspruch 5, wobei die Heizsegmente (144a, 144b) radial gegenüber den warmen Ausbuchtungen (134) genau längsverschoben positioniert sind.

7. Einheit nach einem der Ansprüche 2 bis 6, wobei sich die Heizplatte (130) dem Kragen nachgelagert über eine Strecke kleiner oder gleich 20 % des Durchmessers der sekundären Düse (110) am Kragen (112) erstreckt und/oder sich das Heizstrahlersystem dem Kragen vorgelagert über eine Strecke kleiner oder gleich dem Zweifachen des Durchmessers der sekundären Düse (110) am Kragen (112) erstreckt.

8. Einheit nach einem der Ansprüche 2 bis 7, wobei das Heizstrahlersystem (140) einen Heizungsgradienten auf seiner Oberfläche aufweist.

9. Einheit nach einem der Ansprüche 2 bis 8, wobei das Heizstrahlersystem (140) derart in die sekundäre Düse (110) integriert ist, dass die innere Strömungsoberfläche kontinuierlich ist, um den Strom nicht zu beeinträchtigen.

10. Einheit nach Anspruch 1, umfassend ferner eine primäre Düse, die ausgelegt ist, um einen Abschnitt des primären Kanals (Vp) zu definieren, und wobei:
- der sekundäre Kanal ausgelegt ist, um einen Abschnitt eines sekundären Kanals (Vs) zu definieren und wo sich die Ströme aus dem sekundären Kanal (Vs) und dem primären Kanal (Vp) vereinen können,
- das Heizsystem ein Warmluft-Verteilersystem (200) umfasst, umfassend
eine Entnahme (210), die ausgelegt ist, um sich in einem Element zu befinden, das einen Abschnitt des primären Kanals (Vp) definiert, und ausgelegt, um Strom zu entnehmen, der in dem primären Kanal (Vp) zirkuliert,
einen Verteiler (220), der auf mindestens einem Abschnitt des Innenumfangs der sekundären Düse (110) längs im Bereich des Kragens (112) und/oder zwischen der Hinterkante (120) des primären Kanals (Vp) und dem Kragen (112) positioniert ist,
eine Kanalisation (230), die ausgelegt ist, um den sekundären Kanal (Vs) zu durchqueren und die die Entnahme (210) mit dem Verteiler (220) verbindet.

11. Einheit nach Anspruch 10, wobei der Verteiler (220) ein Ausgabegitter (221) umfasst.

12. Einheit nach einem der Ansprüche 10 bis 11, wobei das Verteilersystem (200) Mittel zur Verlangsamung der Geschwindigkeit der Luft umfasst, die zwischen der Entnahme (210) und dem Verteiler (220) angeordnet sind.

13. Einheit nach einem der Ansprüche 10 bis 12, umfassend einen Strukturarm (14), der ausgelegt ist, um den sekundären Kanal (Vs) zu durchqueren, in dessen Inneren die Kanalisation (230) verläuft.

14. Einheit nach Anspruch 13, wobei die Entnahme (210) ausgelegt ist, um sich dem Strukturarm (13) vorgelagert zu befinden, um der natürlichen Strömungsrichtung zu folgen.

15. Einheit nach einem der Ansprüche 10 bis 14, wobei die Entnahme (220) mit Hilfe eines einziehbaren Schöpfers oder mit Hilfe eines Gitters erfolgt.

16. Einheit nach einem der Ansprüche 10 bis 15, wobei der Verteiler (220) eine Vielzahl von Verteilersegmenten (224, 226) umfasst, die entlang des Innenumfangs der sekundären Düse (110) voneinander beabstandet sind.

17. Einheit nach einem der Ansprüche 10 bis 16, umfassend ferner einen Mischer mit Ausbuchtungen (130), der eine Abfolge warmer Ausbuchtungen (134) aufweist, die ausgelegt sind, um sich im Inneren des sekundären Kanals (Vs) zu erstrecken, und kalter Ausbuchtungen (132), die ausgelegt sind, um sich im Inneren des primären Kanals (Vp) zu erstrecken.

18. Einheit nach den Ansprüchen 16 und 17, wobei die Verteilersegmente (224, 226) radial gegenüber den warmen Ausbuchtungen (134) genau längsverschoben positioniert sind.

19. Einheit nach einem der Ansprüche 10 bis 18, wobei sich der Verteiler (220) dem Kragen nachgelagert über eine Strecke kleiner oder gleich 20 % des Durchmessers der sekundären Düse (110) am Kragen (112) erstreckt und/oder wobei sich der Verteiler (220) dem Kragen vorgelagert über eine Strecke kleiner oder gleich dem Einfachen des Durchmessers der sekundären Düse (110) am Kragen (112) erstreckt.

20. Einheit nach einem der Ansprüche 10 bis 19, wobei der Verteiler (220) in die sekundäre Düse (110) derart integriert ist, dass die innere Strömungsoberfläche kontinuierlich ist, um den Strom nicht zu beeinträchtigen.

21. Einheit nach einem der Ansprüche 10 bis 20, wobei das Verhältnis zwischen dem Querschnitt an der Hinterkante (114) der sekundären Düse (110) und dem Querschnitt am Kragen (112) der sekundären Düse (110) zwischen 1 und 1,05 liegt.

22. Doppelstrom-Strömungsmaschine (10), umfassend eine Einheit nach einem der Ansprüche 1 bis 21.

23. Doppelstrom-Strömungsmaschine (10), umfassend eine Einheit nach einem der Ansprüche 1 bis 8 und umfassend einen Stromerzeuger und/oder eine Batterie zur Versorgung des Heizstrahlersystems (140).

## Claims

1. The assembly for rear of dual-flow turbomachine (10) having a longitudinal axis (X), comprising:
- a secondary nozzle (110) defined about the longitudinal axis (X), said secondary nozzle being configured to eject a mixture of the flows coming from a secondary vein (Vs) and a primary vein (Vp) of the turbomachine (10), the secondary nozzle being of convergent-divergent form with a neck (112) corresponding to a minimal cross-section of the secondary nozzle (110),
**characterised in that** the assembly also comprises a heating system with a heating element (140, 200) with a heating element, the heating element being located on at least one portion of the internal circumference of the secondary nozzle longitudinally in the region of the neck and/or upstream from the neck (112).

2. The assembly according to claim 1, wherein the heating system comprises a heating radiator system (140), comprising at least one heating plate (142) arranged at least on a portion of the internal circumference of the secondary nozzle (110) longitudinally in the region of the neck (112) and/or upstream from the neck (112).

3. The assembly according to claim 2, wherein the heating plate (142) is an electric radiator.

4. The assembly according to any one of claims 2 to 3, wherein the heating radiator system (140) comprises a plurality of heating segments (144a, 144b, etc.) spaced apart from each other along the internal circumference of the nozzle (110).

5. The assembly according to any one of clams 2 to 4, also comprising:
- a primary nozzle (11) configured to define a portion of primary vein (Vp), the secondary nozzle (110) configured to define a portion of secondary vein (Vs),
- a lobe mixer (130), at the downstream end of the primary nozzle (11) and having alternating hot lobes (134) configured to extend inside the secondary vein (Vs) and cold lobes (132) configured to extend inside the primary vein (Vp).

6. The assembly according to claim 5, wherein the heating segments (144a, 144b) are positioned radially facing the hot lobes (134), near the longitudinal offset.

7. The assembly according to any one of claims 2 to 6, wherein the heating plate (130) extends downstream of the neck over a distance less than or equal to 20% of the diameter of the secondary nozzle (110) at the neck (112) and/or wherein the heating radiator system extends upstream from the neck over a distance less than or equal to twice the diameter of the secondary nozzle (110) at the neck (112).

8. The assembly according to any one of claims 2 to 7, wherein the heating radiator system (140) has a heating gradient on its surface.

9. The assembly according to any one of claims 2 to 8, wherein the heating radiator system (140) is integrated into the secondary nozzle (110) such that the internal flow surface is continuous so as not to disrupt the flow.

10. The assembly according to claim 1, comprising also a primary nozzle configured to define a portion of the primary vein (Vp), and wherein:
- the secondary vein is configured to define a portion of secondary vein (Vs) and where the flow coming from the secondary vein (Vs) and the primary vein (Vp) can merge,
- the heating system comprises a hot-air diffusion system (200) comprising
an air bleed (210) configured to be located in an element defining a portion of the primary vein (Vp), and configured to draw from the flow circulating in the primary vein (Vp),
a diffuser (220) positioned on at least one portion of the internal circumference of the secondary nozzle (110) longitudinally in the region of the neck (112) and/or between the trailing edge (120) of the primary vein (Vp) and said neck (112),
a pipe (230), configured to pass through the secondary vein (Vs), and connecting the air bleed (210) to the diffuser (220).

11. The assembly according to claim 10, wherein the diffuser (220) comprises an ejection grille (221).

12. The assembly according to one of claims 10 to 11, wherein the diffusion system (200) comprises air speed-retarding means arranged between the air bleed (210) and the diffuser (220).

13. The assembly according to one of claims 10 to 12, comprising a structural arm (14) configured to pass through the secondary vein (Vs) inside which the pipe (230) passes.

14. The assembly according to claim 13, wherein the air bleed (210) is configured to be located upstream from the structural arm (13), to follow the natural flow direction.

15. The assembly according to one of claims 10 to 14, wherein air bleed (220) occurs by means of a retractable bailer or else by means of a grille.

16. The assembly according to one of claims 10 to 15, wherein the diffuser (220) comprises a plurality of diffuser segments (224, 226) spaced apart from each other along the internal circumference of the secondary nozzle (110).

17. The assembly according to one of claim 10 to 16, comprising also a lobe mixer (130) having alternating hot lobes (134) configured to extend inside the secondary vein (Vs) and cold lobes (132) configured to extend inside the primary vein (Vp).

18. The assembly according to claims 16 and 17, wherein the diffuser segments (224, 226) are positioned radially facing the hot lobes (134), near the longitudinal offset.

19. The assembly according to any one of claims 10 to 18, wherein the diffuser (220) extends downstream of the neck over a distance less than or equal to 20% of the diameter of the secondary nozzle (110) at the neck (112) and/or wherein the diffuser (220) extends upstream from the neck over a distance less than or equal to one time the diameter of the secondary nozzle (110) at the neck (112).

20. The assembly according to any one of claims 10 to 19, wherein the diffuser (220) is integrated into the secondary nozzle (110) such that the internal flow surface is continuous so as not to disrupt the flow.

21. The assembly according to any one of claims 10 to 20, wherein the ratio between the cross-section on the trailing edge (114) of the secondary nozzle (110) and the cross-section at the neck (112) of the secondary nozzle (110) is between 1 and 1.05.

22. A dual-flow turbomachine (10) comprising an assembly according to any one of claims 1 to 21.

23. The dual-flow turbomachine (10) comprising an assembly according to any one of claims 1 to 8 and comprising an electric generator and/or a battery for supplying the heating radiator system (140).
